Europäisches Patentamt

European Patent Office

Office européen des brevets

(11) Publication number: **0 341 753 B1**

## EUROPEAN PATENT SPECIFICATION

(45) Date of publication of patent specification: **16.08.95**

(51) Int. Cl.⁶: **B32B 31/16**, B32B 5/12, B32B 27/32, B29C 55/00

(21) Application number: **89109873.3**

(22) Date of filing: **25.03.83**

(60) Publication number of the earlier application in accordance with Art.76 EPC: **0 090 380**

(54) **Method for preparing a high strength sheet material.**

(30) Priority: **26.03.82 DK 1398/82**

(43) Date of publication of application:
**15.11.89 Bulletin 89/46**

(45) Publication of the grant of the patent:
**16.08.95 Bulletin 95/33**

(84) Designated Contracting States:
**AT BE CH DE FR GB IT LI LU NL SE**

(56) References cited:
EP-A- 0 028 867      GB-A- 1 169 661
GB-A- 1 171 971      GB-A- 1 526 722
GB-A- 1 526 724      US-A- 3 511 742

(73) Proprietor: **Rasmussen, Ole-Bendt**
**Forchwaldstrasse 23**
**CH-6318 Walchwil/Zug (CH)**

(72) Inventor: **Rasmussen, Ole-Bendt**
**Forchwaldstrasse 23**
**CH-6318 Walchwil/Zug (CH)**

(74) Representative: **Schwabe - Sandmair - Marx**
**Stuntzstrasse 16**
**D-81677 München (DE)**

**Description**

This invention relates to a method of preparing a high strength sheet material comprising forming a laminate comprising at least two layers of a thermoplastic polymer material, each layer having a fibrillar grain structure providing a predominant direction of splittability in said layer, the layers being bonded to one another with the said predominant directions of splittability transverse to each other, and biaxially orienting the molecules of said layers by stretching the layers in substantially uniaxial steps, the transverse stretching being effected by applying pressure to the surface of the laminate along lines extending substantially in the longitudinal direction of the laminate to impart thereto a waved configuration.

British patent specification No. 1.526.722 describes the manufacture of a laminate by a method comprising extruding at least two layers, each consisting of a blend of polymers which are incompatible to such a degree that the blend on solidification forms a dispersion of particles of one polymer in a polymeric matrix melt, attenuating each layer to obtain a fibrillar grain structure having a predominant direction of splittability after solidification into a film, bonding the two layers to one another with the said predominant directions transverse to one another and biaxially stretching the solidified laminate in substantially uniaxial steps, the stretching being conducted at a temperature sufficiently low to maintain the predominant direction of splittability in each layer.

The specification of British patent No. 1.526.724 describes the manufacture of a laminate comprising at least two films of a polymeric material by a method which comprises pressing the film together along lines extending substantially in the longitudinal direction of the films and simultaneously stretching the films in the transverse direction, thereby forming a laminate having a waved configuration in its transverse direction.

The latter method may advantageously by utilized to bond the two layers together and to effect the transverse stretching of the laminate in the method described in the British patent specification No. 1.526.722. However, the laminates thus produced ordinarily exhibit longitudinal striations which impart to the laminate thickness variations in the transverse direction and consequently an unsatisfactory rigidity, low temperature tear strength and sealability.

The object of the invention is to provide a laminate having an improved low temperature tear strength and improved sealability.

Another object of the invention is to provide a laminate which is suitable for use in the manufacture of heavy duty sacks, e.g. sacks for Portland cement.

These objects and other objects which will become clear from the following description are obtained by the invention.

The invention relates to an advantageous material composition which in particular exhibits a high low temperature performance and which is readily stabilized against ultra-violet light.

The invention comprises forming a laminate comprising at least two layers of a thermoplastic polymer blend comprising polyethylene, each layer having a fibrillar grain structure providing a predominant direction of splittability in each said layer, the layers being bonded to one another with the said predominant directions of splittability transverse to each other, and biaxially orienting the molecules of said layers by stretching the layers in substantially uniaxial steps to convert the grain of polymer into a zig-zagging micropattern, said blend being composed of high molecular weight high density polyethylene and low density polyethylene having significantly lower molecular weight, said low density polyethylene being selected from the group of copolymers and/or branched polyethylenes which a) exhibit substantially the same or higher elongation at break than the said high molecular weight high density polyethylene when tested at room temperature under slow stretching, b) are capable of distinctly segregating, while forming a distinct microphase, from said high molecular weight high density polyethylene on cooling of a molten homogeneous blend of the said components.

The term "High molecular weight high density polyethylene" ("HMHDPE") comprises HDPE having a melt flow index of about or lower than 0.2 according to ASTM D 1238, condition E.

As regards the low density polyethylene, it may advantageously be LLDPE (see explanation of this term above).

By the combination of polymers which chemically are so closely related and blend homogeneously in the melt but still, i.a. due to the different molecular weights, clearly segregate from each other on cooling, one obtains a particularly fine and regular grain of polymer consisting of highly crystalline and relatively stiff microfibrils in a less crystalline and softer matrix. This structure has been observed in an electron microscope after selectively dissolving the matrix material. As mentioned above the grain thus produced was particularly regular and the distance between adjacent fibrils (from centre to centre) was in the order of magnitude 1/10.000 mm (1/10 $\mu$m). The regular and fine structure, and the good bonding between the stiffer fibrils and softer matrix is of importance as far as the strength properties are concerned. The crystalline nature of the soft matrix gives the material low tendency to cold-flow.

The blending ratio between the HMHDPE and the LDPE (preferably LLDPE) may conveniently be in the range of from 25:75 to 75:25.

HMHDPE exhibits a high tendency to molecular melt orientation. Such melt orientation (except when weak) generally has been found a drawback in connection with the present invention. In this connection one must distinguish between the morphological "orientation" (grain of polymer) which is essential in the present invention, and the molecular melt orientation, which i.a. reduces the elongation of break and thereby the energy absorption.

Therefore, it is advisable to use low air cooling at the exit of the extruder so that the molecular melt orientation can be practically minimized.

Further improvements in this respect, and other essential improvements, can be obtained when the blend further contains polypropylene of a molecular weight significantly lower than said high molecular weight high density polyethylene.

During draw-down at the exit from the extrusion die the HMHDPE will be molecularly oriented and will thereby "carry" the film, so that the polypropylene is protected against any strong molecular orientation, and after crystallization of the polypropylene the latter will "carry" the film so that the HMHDPE has the opportunity to loose part of its molecular orientation again.

The ratio in the blend between the polypropylene and the HMHDPE + LDPE can conveniently be in the range of between 0 and 70/30.

The blend may further contain minor amounts of an alloying agent, e.g. a copolymer of propylene and a polyolefin with 4 or more carbon atoms.

The sheet is preferably allowed to shrink at least 7% in at least one direction, and the stretch ratio in any direction and determined after shrinkage preferably does not exceed 2.5:1.

High-strength laminates manufactured according to the invention can conveniently be made with the angles and other features described in claims 6 to 8.

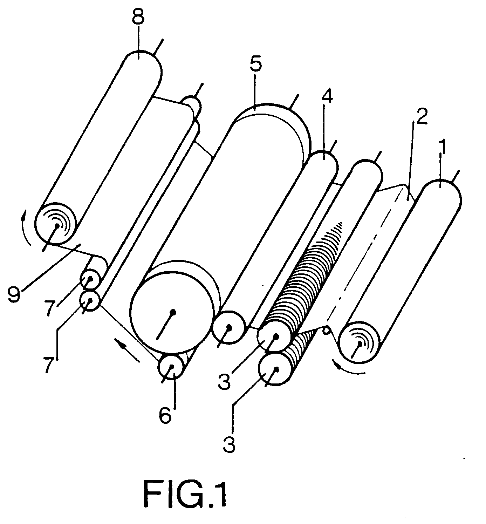

The invention will be further described with reference to Fig. 1 of the drawings which schematically illustrates an apparatus for effecting the transverse stretching and heat treatment steps of the method of the invention.

Fig. 1 illustrates a roll 1 of a laminate 2, and 3 is a set of grooved rollers. The set of grooved rollers 3 are mounted adjacent to an oscillating roller 4 mounted so close to a hot roller 5 that the laminate 2 is pressed against the surface of the hot roller 5 during short intervals. A cooling roller 6 is also mounted adjacent to the heated roller. The apparatus further comprises a set of take-off rollers 7 and a roll 8 of transversely stretched and heat treated laminate 9.

The operation of the apparatus illustrated is as follows:

Laminate 2 is unwound from the roll 1 and is passed through the nip of the set of grooved rollers 3 in which the laminate is stretched in its transverse direction so as to impart thereto a waved configuration. Following the transverse stretching the laminate is contacted with the oscillating roller 4 and subsequently contacted with the hot roller 5. Due to the oscillating movement of the roller 4 relative to the hot roller 5 the heated laminate is free to shrink longitudinally. After leaving the hot roller 5 the laminate is cooled on cooling roller 6 and is subsequently wound so as to form a roll 8 after having passed through the nip of the set of take-off rollers 7.

The invention will now be described in further detail with reference to the following examples.

EXAMPLE 1

A series of 3-layered tubular films are extruded. Each film has a main layer in the middle, a layer for improved heat sealing on one surface and a layer for improved lamination on the other surface. The three layers form 75%, 15% and 10%, respectively, of the total film.

The main layer consists of a blend (intimately pre-blended in a planetary screw extruder) of
1) a socalled "block-copolymer" of propylene and ethylene sold under the trade name "Hostalen 1022",
2) an ethylene-propylene rubber sold under the trade name "Nordel 1500",
3) a high molecular weight high density polyethylene sold under the trade name "Hostalen 9255 F".

Component 1 has melt flow index of 0.4 according to ASTM D 1238 condition L and analysis shows that it contains about 80% homo-polypropylene, about 10% polyethylene and about 10% ethylene-propylene rubber. A true block-copolymer is hardly detectable by the analysis, but it is very likely that there are undetectable segments of polyethylene on the polypropylene which segments assist in forming a good polymer-in-polymer dispersion.

Component 2 contains about 20% ethylene and exhibits some ethylene crystallinity and a melt index of about 0.3 measured at 190°C but otherwise under the same conditions as in the above mentioned ASTM specification (i.e. at "condition E" instead of "condition L").

Component 3 has a density about 0,95 and melt index of about 0.05 measured under the same conditions as component 2.

The blending ratios appear from the following table 1:

## TABLE 1

| SAMPLE | CODE AND REMARKS | PP-"COPOLYMER" % | TRUE PP. % | EPR. ADMIXED % | TRUE EPR. % | HMW. HD.PE. ADMIXED % | TRUE PE. % | FINAL STRETCH RATIO (AFTER SHRINKAGE, IF SHRUNK) MD | FINAL STRETCH RATIO (AFTER SHRINKAGE, IF SHRUNK) CD | ANNEALING TEMPERATURE °C | SHRINK RATIO % MD | SHRINK RATIO % CD |
|---|---|---|---|---|---|---|---|---|---|---|---|---|
| a. | 245,1 | 90 | 72 | 10 | 19 | 0 | 9 | 1.50:1 | 1.50:1 | (35) | | |
| b. | 245,80 | 90 | 72 | 10 | 19 | 0 | 9 | 1.38:1 | 1.38:1 | 80 | 20 | 16 |
| c. | 247,1 | 75 | 60 | 10 | 17 | 15 | 23 | 1.44:1 | 1.56:1 | (35) | | |
| d. | 247,80 | 75 | 60 | 10 | 17 | 15 | 23 | 1.44:1 | 1.36:1 | 80 | 16 | 12 |
| e. | 255,1 | 65 | 52 | 10 | 16 | 25 | 32 | 1.46:1 | 1.54:1 | (35) | | |
| f. | 255,80 | 65 | 52 | 10 | 16 | 25 | 32 | 1.36:1 | 1.36:1 | 80 | 16 | 15 |
| g. | 257,1 | 45 | 36 | 10 | 14 | 45 | 50 | 1.54:1 | 1.50:1 | (35) | | |
| h. | 257,80 | 45 | 36 | 10 | 14 | 45 | 50 | 1.34:1 | 1.44:1 | 80 | 18 | 21 |
| i. | 258,1 4 PLY | 45 | 36 | 10 | 14 | 45 | 50 | 1.60:1 | 1.60:1 | (35) | | |
| j. | 258,80 4 PLY | 45 | 36 | 10 | 14 | 45 | 50 | 1.42:1 | 1.44:1 | 80 | 18 | 16 |
| k. | 255,13 45°GRAIN. | 65 | 52 | 10 | 16 | 25 | 32 | 1.64:1 | 1.64:1 | (35) | | |
| l. | 255,803 45°GRAIN. | 65 | 52 | 10 | 16 | 25 | 32 | 1.46:1 | 1.40:1 | 80 | 18 | 16 |
| m. | 255,50 | 65 | 52 | 10 | 16 | 25 | 32 | 1.60:1 | 1.50:1 | 50 | 8 | 26 |
| n. | 255,60 | 65 | 52 | 10 | 16 | 25 | 32 | 1.56:1 | 1.46:1 | 60 | 12 | 11 |
| o. | 255,70 | 65 | 52 | 10 | 16 | 25 | 32 | 1.40:1 | 1.40:1 | 70 | 16 | 14.6 |
| p. | 179,1 WITH LLDPE. | 80 | 64 | 0 | 8 | LLDPE 20 | 28 | 1.56:1 | 1.50:1 | (35) | | |
| q. | 179,80 WITH LLDPE. | 80 | 64 | 0 | 8 | LLDPE 20 | 28 | 1.40:1 | 1.40:1 | 80 | 16 | 12,5 |
| r. | 255,802 | 65 | 52 | 10 | 16 | 25 | 32 | ca.1.40:1 | ca.1.40:1 | 80 | ca. 16 | ca. 3 |

4

TABLE 1 (continued)

| WEIGHT | YIELD POINT IN NEWTON | | ENERGY AT BREAK. NEWTON×m. | | ULTIMATE TENSILE STRENGTH IN NEWTON | | ELONGATION AT BREAK. % | |
|---|---|---|---|---|---|---|---|---|
| g/sq.m | MD. | C.D. | MD. | C.D. | MD. | C.D. | MD. | C.D. |
| 71 | 27 | 12 | 14,9 | 8,9 | 89 | 67 | 554 | 421 |
| 82 | 36 | 26 | 15,9 | 10,1 | 85 | 55 | 563 | 538 |
| 76 | 34 | 14 | 17,8 | 10,9 | 98 | 71 | 596 | 507 |
| 87 | 36 | 26 | 18,0 | 13,5 | 87 | 63 | 637 | 641 |
| 80 | 32 | 12 | 21,0 | 7,3 | 104 | 54 | 706 | 410 |
| 98 | 39 | 28 | 17,9 | 14,7 | 84 | 65 | 636 | 680 |
| 74 | 27 | 14 | 15,8 | 8,5 | 83 | 57 | 585 | 467 |
| 89 | 26 | 27 | 13,3 | 7,3 | 52 | 50 | 450 | 391 |
| 96 | 39 | 19 | 23,1 | 12,7 | 125 | 80 | 658 | 497 |
| 120 | 42 | 33 | 26,1 | 14,1 | 114 | 78 | 756 | 533 |
| 67 | 29 | 9 | 12,2 | 6,0 | 80 | 49 | 502 | 392 |
| 88 | 33 | 25 | 20,5 | 12,2 | 86 | 61 | 780 | 588 |
| 75 | 31 | 16 | 14,5 | 8,0 | 81 | 51 | 577 | 470 |
| 79 | 31 | 19 | 19,9 | 9,9 | 98 | 54 | 699 | 543 |
| 92 | 33 | 23 | 18,2 | 10,6 | 83 | 53 | 703 | 588 |
| 83 | 40 | 20 | 19,8 | 11,8 | 120 | 86 | 541 | 422 |
| 100 | 49 | 38 | 14,8 | 12,3 | 95 | 77 | 439 | 448 |
| CA. 100 | 33 | 32 | 18,0 | 10,7 | 77 | 62 | 744 | 478 |

The layer for improved heat sealing consists of 70% "Hostalen 1022" and 30% "Nordel 1500".

The layer for improved lamination consists of 50% "Hostalen 1022" and 50% "Nordel 1500".

The extrusion temperature is 250°C and the blow ratio 1:1.

Each of the tubular films is cut helically under an angle of 30° and two such films, each having a width of about 20 cm, are laminated and stretched with the layers for improved lamination facing one another. Initially, the lamination and simultaneous transverse stretching are effected by passing the films six or seven times through the nip between a set of grooved rollers of the type shown in British patent specification No. 1.526.722, Fig. 7. The division on each roller is 1.8 mm, the width of each tip is 0.4 mm and the tip is circularly rounded. The intermeshing between the tips is 0.9 mm. The stretching is carried out at 35°C.

Subsequently, each sample is stretched longitudinally at the same temperature by means of rollers.

Stretch ratios are determined by printed marks.

During the longitudinal stretching, the width is reduced significantly.

Those samples (as will be described below) which are subjected to heat treatment are over-stretched in the longitudinal direction and finally further stretched in the transverse direction. The aim is that the heat treated samples should end at the same stretch ratios and square meter weight as those which are not heat treated. The pleated configuration created by this last transverse stretching is maintained in the film.

Heat treatment is then carried out at various temperatures on 60 cm long and 10 cm wide specimens which are carried forward and backward over a reciprocating heated roller during a period of 120 sec. and under a tension of 300 g. Different temperatures are tried. The specimens are brought in contact with the roller while they still have the pleated configuration but the pleats gradually disappear while the material shrinks.

Samples k and l deviate from the above by being cut under an angle of 45° instead of 30°.

Samples i and j deviate in being 4-layered. The angles are as follows: +45°, +30°, -30°, -45°.

Samples p and q deviate by also being 4-layered materials, with the same directions and further by the composition of the main layer, which is:

80% "Hostalen 1022"

20% linear low density polyethylene of melt index 1.0 and a density of 0.92.

The melt index is measured according to ASTM D 1238 condition L except that the temperature is 190°C,

Sample r is a 2-ply sample similar to sample f regarding composition, angles and heat-treatment temperature, but deviates by not being subjected to the last transverse stretching and therefore not being in a pleated configuration when it is brought in contact with the hot roller. It is heat treated without any essential transverse contraction, but with longitudinal contraction similar to sample f.

15 mm samples are cut in the machine and cross machine directions of each sample.

Stress-strain diagrams are taken at a velocity of 15 cm per minute and an initial distance of 50 mm between the clamps.

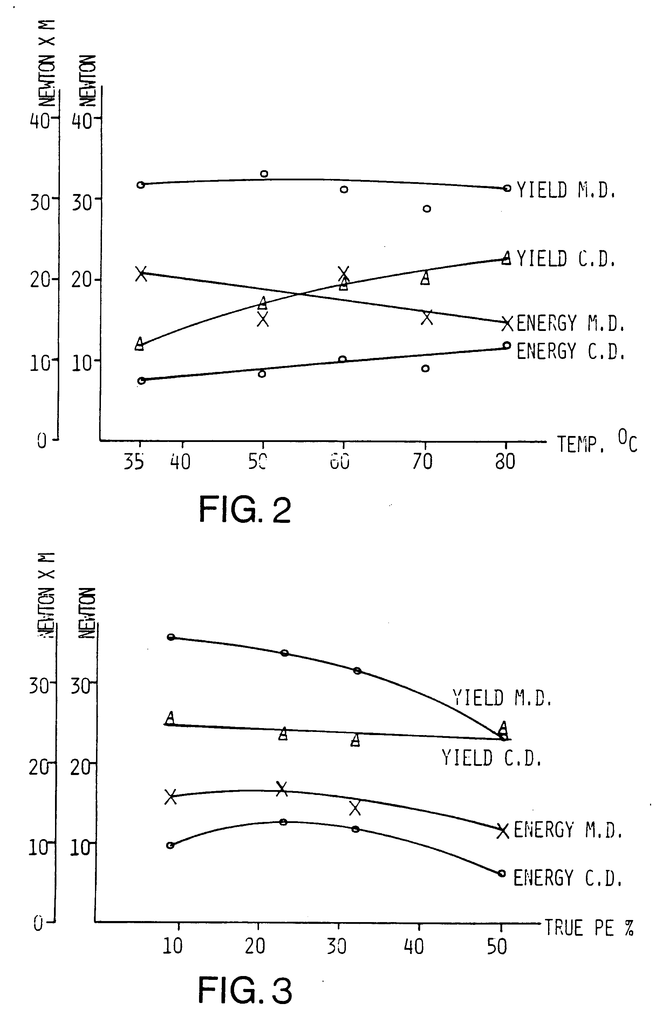

The results obtained will appear from the table and from the diagrams in Figures 2 and 3. The diagrams in Fig. 2 compare samples e, f, m and o which all have the same composition and which are treated in the same manner, except that the annealing temperature varies.

The diagrams in Fig. 3 compare samples b, d, f and h which contain different percentages of polyethylene, but otherwise are identical, the annealing temperature of this series being 80°C. In the diagrams of Figures 1 and 2 the values of force and energy are corrected to a gauge of 80 g/m$^2$.

As regards the comparison between the sample r which, in essence, was not allowed to shrink transversely, and the similar sample f, which was allowed a significant shrinkage, the table shows that the shrunk film has essentially higher transverse elongation at break and transverse energy absorption, while the two samples have about the same yield point in the transverse direction.

EXAMPLE 2

The procedure described in example 1 is carried out on a number of film compositions, described in table 2 below, however with the last transverse stretching step and the subsequent heat-treatment taking place in continuous manner on a pilot machine. During this stretching step, the intermeshing of the grooved rollers with each other is adjusted to obtain such a degree of pleating that there will be practically no transverse tension in the film during the heat treatment, but also so that all pleats produced by this stretching disappear due to the transverse shrinkage.

The extrusion temperature is in all cases 200°C with a blow ratio of 1:1 and a moderate air cooling.

The high-strength laminate are in all cases made from two spirally cut extruded tubular films. Different angles of cutting have been tried, see table 2.

All steps of stretching are carried out at 35°C, and the heat treatment is effected on a roller heated to 80°C. The heat treatment takes about 10 seconds. The laminate is held practically tension-free while being fed in between the last pair of grooved rollers (those which immediately preceed the roller for heat treatment). This measure causes the laminate to shrink about 5-10% in the longitudinal direction during the transverse stretching between the grooved rollers. After this stretching, the laminate follows the surface of one of these rollers and is then directly transferred from this surface to the surface of the hot roller, the distance between these surfaces being only about 1 cm. This guided transfer secures that the fine pleats, produced by the stretching between the grooved rollers, remain fine and even so as to cause an even transverse contraction on the hot roller.

The latter is driven at a circumferential velocity which is about 10% lower than the circumferential velocity of the last set of grooved rollers. This measure, and a minimum tension at the take-off from the hot roller, gives the laminate a high freedom to shrink longitudinally.

When leaving the hot roller, the laminate is transferred to a cooling roller, after which it is wound up.

The longitudinal and transverse stretch ratios are measured after each step of the process by measuring the deformation of circles, which have been printed on the film before the first stretching step. The aim is a final stretch ratio (i.e. <u>after</u> the heat treatment) of 1.40:1 in both directions.

The adjustment of the transverse ratio takes place by the number of transverse stretching steps, which have been varied between 5 and 7 (to which comes the last one before the heat treatment). The adjustment of the longutidinal stretch ratio takes place by variation of the relative velocities of the rollers in the unit for longitudinal stretching. A proper adjustment of the stretch ratios is a complicated matter, and variations between 1.35:1 and 1.45:1 have been tolerated.

The different laminates thus produced are tested for:

a) Elmendorf Tear Propagation Resistance according to BS 308 B (43 mm tear),

b) Beach Puncture Resistance according to BS 4816:72,

c) Falling Dart Impact Strength according to ASTM 1709.

Description of the raw materials:

The melt flow index (m.f.i.) refers to ASTM D 1238 condition L (in case of polypropylenes) or condition E (in the case of polyethylenes or EPDM).

"Dowlex 2045": LLDPE of density 0,920 and m.f.i. = 1.0

"Hostalen 9255": HMHDPE of density about 0,95 and m.f.i. = about 0.05.

"Hostalen 1050": homo-PP of m.f.i. = 0.4.

"Hostalen 1022": co-PP of m.f.i. = 0.4 (further description see example 1).

"Novolen 1300 E": gas phase-polymerized PP with about 20% contents of atactic PP, partly forming a block-copolymer with the isotactic PP.

"Nordel 1500": EPDM of m.f.i. = about 0.3.

EVA: An EVA containing about 20% vinylacetate and of m.f.i. = about 5.

TABLE 2

| Film Code No. | Composition — Inner layer (for improved lamination), 10% of total | Middle layer 75% of total | Outer layer (for sealing), 15% of total | Direction of ply degrees | Film weight g/sq m | Falling Dart Impact Strength grams | Elmendorf tear Strength (43 mm.tear) MD | CD | 45° | Beach Puncture Resistance, Joules MD | CD |
|---|---|---|---|---|---|---|---|---|---|---|---|
| R402 | 70% "Dowlex 2045" 30% "Nordel 1500" | 80% "Hostalen 1022" 20% "Dowlex 2045" | 100% "Dowlex 2045" | 30 | 75 | 500-800 | 2160+ | 1070 | 1340 | 11.0 | 9.4 |
|  |  |  |  | 45 | 75 | 600-800 | 1480 | 1100 | 920 | 14.2 | 13.3 |
| R404 | " | 80% "Novolen 1300 E" 20% "Dowlex 2045" | " | 30 | 71 | 600-700 | 2910+ | 1450 | 1770+ | 6.4 | 9.1 |
|  |  |  |  | 45 | 74 | 600-800 | 2790+ | 1830 | 1280 | 9.9 | 13.8 |
| R407 | " | 35% "Hostalen 9255" 35% "Hostalen 1022" 30% "Dowlex 2045" | " | 30 | 78 | 400-700 | 1620 | 1870 | 2400+ | 11.1 | 7.0 |
|  |  | 50% "Hostalen 1022" 20% "Hostalen 9255" 20% "Dowlex 2045" 10% "Nordel 1500" | 70% "Hostalen 1022" 30% "Nordel 1500" | 45 | 85 | 400-600 | 3030+ | 2110 | 2270+ | 7.9 | 7.5 |
|  |  |  |  | 30 | 79 | 600-900 | 1410 | 1430 | 2210 | 13.7 | 11.9 |
| R414 | " | 20% "Dowlex 2045" 10% "Nordel 1500" | " | 45 | 73 | 600-800 | 1460 | 1400 | 990 | 11.9 | 12.4 |
|  |  |  |  | 60 | 71 | 600-800 | 1660 | 2750+ | 1050 | 10.3 (average of MD and CD) | |
| R417 | " | 50% "Novolen 1300 E" 20% "Hostalen 1022" 20% "Dowlex 2045" 10% "Nordel 1500" | " | 30 | 77 | 600-900 | 1280 | 1250 | 2040+ | 11.9 | 12.6 |
|  |  |  |  | 45 | 82 | 800-900 | 1990 | 1460 | 750 | 13.3 | 14.0 |
|  |  |  |  | 60 | 80 | 800-900 | 1780 | 2490+ | 650 | 12.1 | 13.6 |
| R419 | " | 50% "Hostalen 1050" 20% "Hostalen 9255" 20% "Dowlex 2045" 10% "Nordel 1500" | " | 30 | 74 | 500-700 | 1670 | 1520 | 2050 | 10.2 | 8.5 |
|  |  |  |  | 45 | 71 | 500-800 | 2020 | 1120 | 1360 | 11.3 | 10.5 |
| R420 | " | 60% "Hostalen 1022" 20% "Hostalen 9255" 20% "EVA" | 100% "Dowlex 2045" | 45 | 75 | 500-800 | 2450 | 1620 | 1850 | 8.7 | 7.4 |
| R421 | " |  | " | 45 | 77 | 700-900 | 500 | 2190+ | 800 | 12.9 | 9.9 |
| R422 | " | 50% "Hostalen 1022" 20% "Hostalen 9255" 20% "Dowlex 2045" 10% "Nordel 1500" | " | 45 | 84 | 700-900 | 2460+ | 1420 | 2160+ | 13.6 | 10.2 |
| | Low density polyethylene (200 μm) Ordinary sack quality film for comparison | | | | 184 | 500-600 | 840 | 1300 | 1700 | 5.0 (average of MD and CD) | |

+ = higher than, and indicates that one or more of the single tests exceeded the maximum of the apparatus.

Several of the samples were further tested for Elmendorf Tear Propagation Strength at -15°C. For the samples of composition R 407, R 414 and R 419, this gave the same results (within the ranges of accuracy of this method) as the test results at 20°C shown in table 2. This high performance at low temperatures is surprising in view of the high contents of polypropylene, but explicable by the microstructure, which comprises the microscopical to submicroscopical fibrils of stiff polypropylene which are almost entirely embedded in relatively soft polyethylene.

A study of the tear resistance values in relation to the lamination angles (see table 2) gives the result that the 45° laminates show a significant weakness (relatively speaking) in their 45° directions, i.e. parallel to the direction of grain in one of the layers

The same is not true for the 30° laminates, which generally show significantly higher all-over tear values, considering that the weakest direction generally determines the value of the laminate with respect to tear propagation resistance.

An exception to the rule that the 45° laminates exhibit a relatively low tear propagation resistance along the 45° direction, is found in the composition R 407. The main layer (middle layer) of this composition consists of HMHDPE and LLDPE in combination with a PP of significantly lower molecular weight than the HMHDPE, cf. claim 18. It is believed that the improved 45° tear strength in this case is due to the advantageous effects explained in the general description in connection with this claim.

Finally, the compositions containing 100% LLDPE in the layers for sealing (i.e. R 402, 404, 407, 420, 421, 422) have been found to form an adequate seal by ultrasonic sealing. The seal resists shear forces up to about 5-6 kp/2.5 mm and peel forces up to about 2 kp/2.5 mm. In this connection it is of importance that the seal layer and the matrix in the middle layer consist of essentially the same material, namely both of a low-density polyethylene type, while the fibrillar, discontinuous, embedded phase of the middle layer consists of the much higher melting polypropylene.

## EXAMPLE 3

High-strength laminates were produced from two compositions, both entirely consisting of HMHDPE and LLDPE, except for minor amounts of EPDM in the layer for improved lamination. The procedure was identical to that explained in example 2, except that a prototype machine for full technical scale operation was used.

In both cases, the extrusion temperature was 240°C, the angle of cutting 45°, the temperature of stretching 35°C, the temperature of the rollers for heat treatment 80°C, the time of heat treatment about 10 sec. Two heated rollers were used, one after the other, and subsequently two cooling rollers. The final stretch ratio, measured after heat treatment, was about 1.4:1 in both directions.

The entire stretching/lamination process including the heat treatment was operated in-line, the line comprising five transverse stretching stations, one longitudinal stretching station, and the last stretching station supplying the laminate with pleats for the "free-shrinkage" heat treatment. Between the last pair of grooved rollers and the first roller for heat treatment, and in close proximity to both, was an idle roller serving to keep the pleats fine and even.

The transverse stretching ratio was controlled by adjustment of the intermeshing between the grooved rollers in each of the first five pairs of grooved rollers.

As in example 2, the intermeshing between the last pair of grooved rollers was adjusted to minimize the transverse tension during the heat treatment.

The linary velocity of the laminate at the exit from the stretching/lamination line was about 30 m/min.

The composition of the films and the results of the laboratory testing appear from table 3.

The polymer designations and the test methods for impact, tear and puncture resistance are explained in example 2 above. The other mechanical properties were determined from strain/stress curves taken for 15 mm wide specimens, the initial distance between the draw-clambs being 50 mm.

Strain/stress curves were taken as a modestly low velocity, namely 150 mm/min. and at a very low velocity, namely 15 mm/min. The latter was tried in order to study the creep strength.

The yield tension (in Newton/mm$^2$) therefore was determined at each of the two velocities, while elongation at break (in %) and ultimate tensile tension (in Newton/mm$^2$) were determined only at the velocity 150 mm/min.

The laminate prepared from composition R 1 was further converted to open-mouth sacks on commercial sack-making machinery. It was first folded to a flat tube while being side-seamed by use of a commercial hot-melt adhesive, then cut into lengths while being heat-sealed transversely to form the bottom of the sack. This seam was made by simple impulse sealing (without any kind of folding or over-taping) but with the conditions of sealing optimized to allow maximum shrinkage in the longitudinal direction. The dimension of the sack was about 100 cm x 50 cm. About 30 of such sacks were filled, closed by overtaping and drop-tested at minus 20°C In competition with sacks of similar size made from a 185 g/sq m low density polyethylene film of standard quality for sack production. By these tests the high-strength laminate was found to be clearly superior in spite of its much lower gauge. The weight of the high-strength laminate used for these bag tests was 80 g/sq m, in other words almost 2½ times as light as the ordinary

TABLE 3

| Film Code No. | Composition | | | Film weight | Elmendorf Tear Strength | | | Beach Puncture Resistance, | | | Yield point tension | | | Ultimate Tensile Tension | | | Elongation at break | | |
|---|---|---|---|---|---|---|---|---|---|---|---|---|---|---|---|---|---|---|---|
| | Inner layer (for improved lamination) 10% of total | Middle layer 75% of total | Outer layer (for improved sealing) 15% of total | g/sq m | (43 mm tear) | | | Joules | | | $N/mm^2$ | | | $N/mm^2$ | | | % | | |
| | | | | | MD | CD | 45° | MD | CD | 45° | MD | CD | 45° | MD | CD | 45° | MD | CD | 45° |
| R1 | 70% "Dowlex 2045" 30% "Nordel 1500" | 50% "Hostalen 9255" 50% "Dowlex 2045" | 100% "Dowlex 2045" | 74 | 2020+ | 2360+ | 1350 | 10,4 | 13,1 | 12,2 | 150 mm/ min. 19,5 15 mm/ min. 16,2 | 150 mm/ min. 19,3 15 mm/ min. 17,3 | 150 mm/ min. 20,3 15 mm/ min. 17,3 | 51,8 | 43,9 | 30,0 | 603 | 536 | 408 |
| R2 | " | 70% "Hostalen 9255" 30% "Dowlex 2045" | " | 73 | 3200+ | 3000+ | 2220+ | 4,5 | 6,3 | 6,7 | 150 mm/ min. 20,3 15 mm/ min. 17,8 | 150 mm/ min. 19,7 15 mm/ min. 18,1 | 150 mm/ min. 21,6 15 mm/ min. 18,8 | 49,7 | 48,5 | 26,9 | 536 | 540 | 324 |

+ = higher than, and indicates that one or more of the single tests exceeded the maximum of the apparatus.

## Claims

1. A method of preparing a high strength sheet material comprising forming a laminate comprising at least two layers of a thermoplastic polymer blend comprising polyethylene, each layer having a fibrillar grain structure providing a predominant direction of splittability in each said layer, the layers being bonded to one another with the said predominant directions of splittability transverse to each other, and biaxially orienting the molecules of said layers by stretching the layers in substantially uniaxial steps to convert the grain of polymer into a zig-zagging micro-pattern,
**characterized** by said blend being composed of high molecular weight high density polyethylene and low density polyethylene having a significantly lower molecular weight, said low density polyethylene being selected from the group of copolymers and/or branched polyethylens which
   a) exhibit substantially the same or higher elongation at break than the said high molecular weight high density polyethylene when tested at room temperature under slow stretching, and
   b) are capable of distinctly segregating, while forming a distinct microphase, from said high molecular weight high density polyethylene on cooling of a molten homogeneous blend of the said components.

2. A method according to claim 1, characterized in that said blend further contains polypropylene of a molecular weight significantly lower than that of said high molecular weight high density polyethylene.

3. A method according to claim 2 , characterized in that said blend further contains minor amounts of an alloying agent, e.g. a copolymer of propylene and an olefin with 4 or more carbon atoms.

4. A method according to claim 1 or 2 , characterized by subjecting the sheet to shrinkage by at least 7% in at least one direction.

5. A method according to claim 1 or 2 , characterized in that the stretch ratio in any direction and determined after shrinkage does not exceed 2.5:1.

6. A method as in claim 1 , characterized in that the direction of splittability in each layer of said layers of the laminate to be biaxially oriented forms an angle of between 10 and 35 degrees C with the machine direction of the laminate.

7. A method as in claim 1, characterized in that the stretch ratio in any direction and determined after shrinkage is between 1.3:1 and 1.9:1.

8. A method as in claim 1, characterized in subjecting the biaxially oriented laminate to a heat treatment while allowing at least 7% shrinkage of the laminate to take place in at least its transverse direction.

## Patentansprüche

1. Verfahren zur Herstellung eines hochfesten Bahnmaterials, mit der Bildung eines Laminats, das mindestens zwei Schichten aus einer thermoplastischen Polymermischung aufweist, das Polyethylen aufweist, wobei jede Schicht eine faserige Gefügestruktur bzw. fibrillenartige Faserstruktur hat, die eine vorherrschende Spaltbarkeitsrichtung in jeder genannten Schicht liefert, und wobei die Schichten so miteinander verbunden sind, daß die genannten vorherrschenden Spaltbarkeitsrichtungen quer zu einander verlaufen, und mit der biaxialen Orientierung der Moleküle der genannten Schichten durch Dehnen der Schicht in im wesentlichen einaxialen Schritten, um das Polymergefüge in ein Zick-Zack-Mikromuster umzuwandeln,
dadurch **gekennzeichnet**, daß die genannte Mischung aus Polyethylen mit hohem Molekulargewicht und hoher Dichte sowie aus Polyethylen mit niedriger Dichte und beträchtlich niedrigerem Molekulargewicht zusammengesetzt ist, wobei das genannte Polyethylen mit niedriger Dichte aus der Gruppe von Copolymeren und/oder verzweigten Polyethylenen ausgewählt ist, die
   a) im wesentlichen dieselbe oder eine höhere Bruchdehnung als das genannte Polyethylen mit hohem Molekulargewicht und hoher Dichte aufweist, wenn der Versuch bei Raumtemperatur unter langsamer Dehnung durchgeführt wird, und
   b) imstande sind, sich, während sie eine deutliche Mikrofaser bilden, vom genannten Polyethylen mit hohem Molekulargewicht und hoher Dichte bei der Abkühlung eines geschmolzenen, homogenen Gemisches der genannten Komponenten deutlich zu entmischen.

**2.** Verfahren nach Anspruch 1, dadurch **gekennzeichnet**, daß die Mischung ferner Polypropylen mit einem Molekulargewicht enthält, das beträchtlich niedriger ist als das des genannten Polyethylen mit hohem Molekulargewicht und hoher Dichte.

**3.** Verfahren nach Anspruch 2, dadurch **gekennzeichnet**, daß die Mischung ferner kleinere Mengen eines Legierungsmittels enthält, beispielsweise eines Propylen-Copolymers und eines Olefins mit vier oder mehr Kohlenstoffatomen.

**4.** Verfahren nach Anspruch 1 oder 2, dadurch **gekennzeichnet**, daß man die Bahn einer Schrumpfung von mindestens 7% in mindestens einer Richtung unterzieht.

**5.** Verfahren nach Anspruch 1 oder 2, dadurch **gekennzeichnet**, daß das Dehnungsverhältnis in jeder Richtung, und bestimmt nach der Schrumpfung, 2,5:1 nicht überschreitet.

**6.** Verfahren nach Anspruch 1, dadurch **gekennzeichnet**, daß die Spaltbarkeitsrichtung in jeder Schicht der genannten Schichten des Laminats, die biaxial orientiert sein sollen, einen Winkel von zwischen 10 und 35 Grad C zur Maschinenrichtung des Laminats bildet.

**7.** Verfahren nach Anspruch 1, dadurch **gekennzeichnet**, daß das Dehnungsverhältnis in jeder Richtung und bestimmt nach der Schrumpfung zwischen 1,3:1 und 1,9:1 beträgt.

**8.** Verfahren nach Anspruch 1, dadurch **gekennzeichnet**, daß man das biaxial orientierte Laminat einer Wärmebehandlung unterzieht, während man eine Schrumpfung von mindestens 7% des Laminats wenigstens in seiner Querrichtung stattfinden läßt.

**Revendications**

**1.** Méthode de préparation d'un matériau de feuille à résistance élevée comprenant la formation d'un laminé comprenant au moins deux couches d'un mélange de polymère thermoplastique comprenant du polyéthylène, chaque couche ayant une structure de grain fibrillaire procurant une direction prédominante de séparabilité à chacune desdites couches, les couches étant liées l'une à l'autre avec lesdites directions prédominantes de séparabilité transversales l'une à l'autre, et l'orientation biaxialement des molécules desdites couches par étirage des couches en des étapes substantiellement uniaxiales pour convertir le grain du polymère en un micro-réseau en zig zag,
caractérisé en ce que ledit mélange est composé de polyéthylène à haute densité à poids moléculaire élevé et de polyéthylène à basse densité ayant un poids moléculaire plus faible, ledit polymère à basse densité étant choisi dans le groupe des copolymères et/ou polyéthylènes ramifiés qui

a) montrent une élongation substantiellement identique ou plus élevée à la rupture que ledit polyéthylène à haute densité à haut poids moléculaire lorsque testés à température ambiante sous étirage lent, et
b) sont capables de ségreger distinctement, tout en formant une microphase distincte, à partir du dipolyéthylène à densité élevée à poids moléculaire élevé lors du refroidissement d'un mélange homogène fondu desdits composants.

**2.** Méthode selon la revendication 1, caractérisée en ce que ledit mélange contient de plus un polypropylène d'un poids moléculaire significativement plus faible que celui dudit polyéthylène à haute densité à poids moléculaire élevé.

**3.** Méthode selon la revendication 2, caractérisée en ce que ledit mélange contient de plus des quantités minoritaires d'un agent d'alliage, par exemple un copolymère de propylène et d'une oléfine avec 4 ou plus atomes de carbone.

**4.** Méthode selon la revendication 1 ou 2, caractérisée par la soumission de la feuille à un rétrécissement d'au moins 7% dans au moins une direction.

**5.** Méthode selon la revendication 1 ou 2, caractérisée en ce que le rapport d'étirage dans une direction quelconque et déterminé après rétrécissement n'excède pas 2,5 : 1.

**6.** Méthode selon la revendication 1, caractérisée en ce que la direction de séparabilité dans chaque couche desdites couches du laminé à orienter biaxialement forme un angle d'entre 10 et 35 degrés avec la direction de machine du laminé.

**7.** Méthode selon la revendication 1, caractérisée en ce que le rapport d'étirage dans une direction quelconque et déterminé après rétrécissement est entre 1,3:1 et 1,9:1.

**8.** Méthode selon la revendication 1, caractérisée en ce qu'on soumet le laminé orienté biaxialement à un traitement thermique tout en laissant au moins 7% de rétrécissement du laminé se produire dans au moins sa direction transversale.

FIG.1

FIG. 2

FIG. 3